# EUROPÄISCHE PATENTSCHRIFT

(11) **EP 2 223 054 B1**
(45) Veröffentlichungstag und Bekanntmachung des Hinweises auf die Patenterteilung: **02.09.2015**
(21) Anmeldenummer: 08859506.1
(22) Anmeldetag: 09.12.2008
(51) Int. Cl.: G01D 21/00

(54) **VORRICHTUNG ZUR ÜBERTRAGUNG VON ELEKTRISCHER ENERGIE UND INFORMATION**
DEVICE FOR TRANSMITTING ELECTRIC ENERGY AND INFORMATION
DISPOSITIF POUR TRANSMETTRE DE L'ÉNERGIE ÉLECTRIQUE ET DE L'INFORMATION

(30) Priorität: 13.12.2007 DE 102007060555
(43) Veröffentlichungstag der Anmeldung: 01.09.2010
(73) Patentinhaber: Endress+Hauser Wetzer GmbH+Co. KG, 87484 Nesselwang (DE)
(72) Erfinder: WÖHRLE, Markus, 87637 Eisenberg (DE); WARNKING, Michael, 87637 Sonthofen (DE)
(74) Vertreter: Andres, Angelika Maria
(86) Internationale Anmeldenummer: PCT/EP2008/067053
(87) Internationale Veröffentlichungsnummer: WO 2009/074545

(56) Entgegenhaltungen:
- EP-A1- 0 768 540
- EP-A1- 1 385 251
- GB-A- 2 251 947
- US-A- 5 105 190
- US-A- 5 345 231

## Beschreibung

Die Erfindung bezieht sich auf eine Vorrichtung zur Übertragung von elektrischer Energie und Daten zwischen einer Primärseite und einer Sekundärseite.

In der modernen Prozess- und Automatisierungstechnik wird eine Reihe von Messgeräten bzw. Datenaufzeichnungsgeräten verwendet, um Prozesse zu überwachen, zu steuern oder um Vorgänge zu registrieren. Befindet sich das Medium oder der zu überwachende Prozess in einem explosionsgefährdeten Bereich, so ist meist eine galvanische Trennung erforderlich, über weiche dennoch Energie und Informationen bzw. Daten zu den im explosionsgefährdeten Bereich befindlichen Feldgeräten übertragbar sein müssen.

Im Stand der Technik ist hierfür bereits eine Reihe von Möglichkeiten bekannt, siehe z.B. DE 2 321 900, EP 0 977 406 A1 oder EP 0 927 982 B1. Diese Ausgestaltungen sind jedoch sehr aufwendig und kostenintensiv. Eine weitere Möglichkeit besteht darin, die erforderliche Energie über einen Transformator als Übertrager zu übertragen und die Daten über Optokoppler, wobei auf jeder Seite der galvanischen Trennung eine entsprechende Einheit verwendet wird, um bidirektionale Datenübertragung zu ermöglichen. Eine solche "sichere Trennung" ist sehr platzaufwendig und durch die erhöhten Bauteilanforderungen auch EP 1 385 251 A1 offenbart eine Vorrichtung mit zwei relativ zueinander bewegbaren Bauteilen und einer Einrichtung zur gleichzeitigen Übertragung von elektrischer Energie und Information zwischen diesen Bauteilen, die mittels eines Transformators funkioniert.

Häufig tritt es auf, dass in dem eigentlichen explosionsgefährdeten Prozess eine größere Anzahl an Messgeräten bzw. Feldgeräten vorhanden ist, welche entsprechend mit Energie zu versorgen bzw. mit welchen zu kommunizieren ist. Benötigt jedes der Feldgeräte ein eigenes Versorgungs- bzw. Kommunikationsgerät, so ist dies ebenfalls mit Kosten und Platzaufwand verbunden.

Die Aufgabe der Erfindung besteht darin, eine galvanische Trennung zwischen einer explosionsgefährdeten Zone und einer nicht explosionsgefährdeten Zone vorzuschlagen, über welche Informationen und Energie übertragbar sind und welche zudem den Anschluss von mehreren Feldgeräten auf der Sekundärseite erlaubt.

Die Erfindung löst die Aufgabe dadurch, dass mindestens eine Übertragungseinheit zwischen der Primärseite und der Sekundärseite vorgesehen ist, dass auf der Sekundärseite mindestens ein erster Datenkanal vorgesehen ist, welcher mindestens eine Adresse aufweist, dass auf der Primärseite mindestens eine Frequenzsteuereinheit vorgesehen ist, welche derartig ausgestaltet ist, dass die Frequenzsteuereinheit die Arbeitsfrequenz der Übertragungseinheit entsprechend der zu übertragenden Daten und entsprechend der Adresse mindestens des ersten Datenkanals einstellt, dass auf der Sekundärseite mindestens eine Lasteinstelleinheit vorgesehen ist, welche derartig ausgestaltet ist, dass die Lasteinstelleinheit die elektrische Last, welche auf der Sekundärseite an der Übertragungseinheit anliegt, entsprechend der zu übertragenden Daten und entsprechend der Adresse mindestens des ersten Datenkanals einstellt.

Die Idee der Erfindung besteht somit darin, dass Informationen von der Primärseite auf die Sekundärseite über eine Modulation der Arbeitsfrequenz übertragen werden und dass von der Sekundärseite auf die Primärseite eine Laständerung der Übertragung der Daten dient. Für den Anschluss von mehreren Kanälen - also von mehreren Feldgeräten oder Bestandteilen von Feldgeräten - ist eine Adressierung vorgesehen. Über die Adressierung ist es möglich, gezielt einzelne Kanäle anzusprechen bzw. auf der Primärseite die Information darüber zu erhalten, von welchem Datenkanal die Information stammt. D.h. über die Adressierung bzw. die Adresse ist eine eindeutige Zuordnung zwischen den Daten/Informationen und der Quelle bzw. dem Empfänger gegeben.

Eine Ausgestaltung sieht vor, dass auf der Sekundärseite mindestens ein erster Datenkanal und mindestens ein zweiter Datenkanal vorhanden sind, welche jeweils mindestens eine eigene Adresse aufweisen. Über mehrere Datenkanäle lassen sich somit mehrere Feldgeräte an eine Schnittstelle anschließen, wobei über die jeweils eigenen Adressen auch eine sicherere Zuordnung der Daten möglich ist.

Eine Ausgestaltung beinhaltet, dass der erste Datenkanal und der zweite Datenkanal derartig ausgestaltet sind, dass der erste Datenkanal und der zweite Datenkanal galvanisch voneinander getrennt sind. Vorzugsweise erzeugt die Übertragungseinheit selbst eine galvanische Trennung zwischen der Primär- und der Sekundärseite. In dieser Ausgestaltung sind somit weiterhin auch zumindest zwei Datenkanäle auf der Sekundärseite galvanisch voneinander getrennt. Entsprechendes gilt für weitere Datenkanäle.

Eine Ausgestaltung sieht vor, dass die Frequenzsteuereinheit derartig ausgestaltet ist, dass die Frequenzsteuereinheit die Arbeitsfrequenz der Übertragungseinheit entsprechend der zu übertragenden Daten und/oder entsprechend der Adresse des Datenkanals oder der Adressen der Datenkanäle, für welchen bzw. für welche die Daten bestimmt sind, einstellt, dass die Lasteinstelleinheit derartig ausgestaltet ist, dass die Lasteinstelleinheit die elektrische Last, welche auf der Sekundärseite an der Übertragungseinheit anliegt, entsprechend der zu übertragenden Daten und/oder entsprechend der Adresse des Datenkanals oder der Adressen der Datenkanäle, von welchem bzw. von welchen die Daten stammen, einstellt. In dieser Ausgestaltung sind somit mehrere Datenkanäle auf der Sekundärseite vorgesehen, welche beispielsweise der Energieversorgung bzw. der Kommunikation mit entsprechend vielen Feldgeräten dienen. Bei der Datenkommunikation wird jeweils vorzugsweise die Adresse des Datenkanals übermittelt, für weichen die Daten bestimmt sind bzw. von welchem die Daten stammen. In einer Ausgestaltung kann es auch vorgesehen sein, dass die Übermittlung der Adresse unterlassen wird, wenn es sich beispielsweise um allgemein gültige Aussagen handelt. In dieser Ausgestaltung wird somit insbesondere umgesetzt, dass es auf der Primärseite nur einen Anschluss gibt, welcher gleichwohl die Energieversorgung von bzw. die Kommunikation mit mindestens zwei Einheiten auf der Sekundärseite erlaubt.

Eine Ausgestaltung beinhaltet, dass mindestens der erste Datenkanal derartig ausgestaltet ist, dass der erste Datenkanal nur nach einer vorhergehenden Adressierung von der Primärseite über die Übertragungseinheit Daten über die Übertragungseinheit überträgt. Insbesondere in Bezug auf die Laständerung ist es erforderlich, um Mehrdeutigkeiten zu verhindern, dass nicht alle Datenkanäle gleichzeitig senden bzw. gleichzeitig die Last ändern. Dies wird hier dadurch verhindert, dass nur der Datenkanal sendet, d.h. Daten überträgt, welcher vorher durch die Primärseite angesprochen worden ist. Mit anderen Worten: Nur der Datenkanal, an welchen eine Anfrage gerichtet worden ist, meldet sich auch und gibt eine Antwort.

Eine Ausgestaltung sieht vor, dass die Übertragungseinheit derartig ausgestaltet ist, dass die Übertragungseinheit eine galvanische Trennung zwischen der Primärseite und der Sekundärseite bewirkt.

Eine Ausgestaltung beinhaltet, dass die Laststeuereinheit derartig ausgestaltet ist, dass die Laststeuereinheit zur Übertragung von Daten und/oder Adressen eine steilflankige und/oder kurzzeitige Änderung der Last vornimmt.

Eine Ausgestaltung sieht vor, dass die Übertragungseinheit mindestens einen Transformator aufweist.

Eine Ausgestaltung beinhaltet, dass es sich bei den zu übertragenden Daten mindestens um Messwerte und/oder um Messparameter handelt.

Eine Ausgestaltung sieht vor, dass mindestens der erste Datenkanal und/oder der zweite Datenkanal mindestens einen Energiespeicher aufweist. Der

Energiespeicher dient dabei vorzugsweise der Speicherung von elektrischer Energie und ist im einfachsten Fall zumindest teilweise ein Kondensator. Da die Kommunikation von der Sekundär- auf die Primärseite über die Modulation der Last vorgenommen wird, nimmt diese Ausgestaltung darauf Rücksicht, dass es auch durch das mit dem jeweiligen Datenkanal verbundene Feldgerät zu einer Laständerung kommen kann. Diese Laständerung resultiert jedoch aus dem Betreiben des Feldgerätes und sollte nicht als zu übertragende Information von der Primärseite interpretiert werden. Der Energiespeicher fängt somit mögliche Laständerungen der Feldgeräte ab.

Die Erfindung wird anhand der nachfolgenden Zeichnungen näher erläutert. Es zeigt:
Fig. 1: eine schematische Darstellung der erfindungsgemäßen Vorrichtung, und
Fig. 2: eine detaillierte Ausgestaltung einer erfindungsgemäßen Vorrichtung.

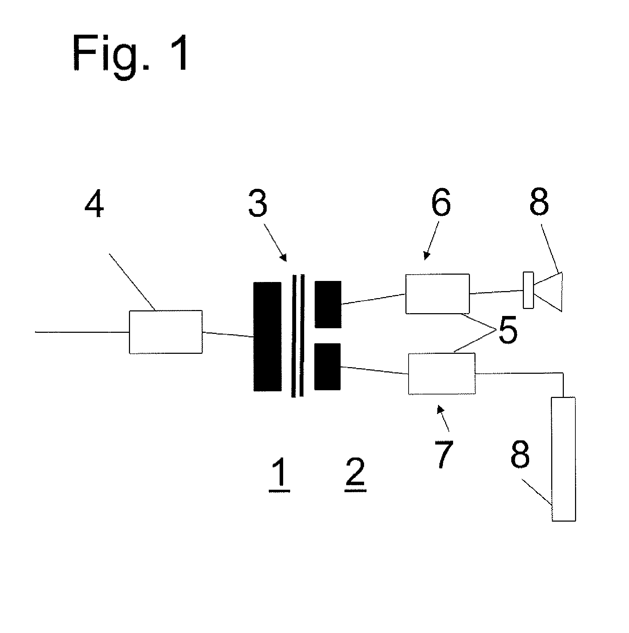

In der Fig. 1 ist schematisch der erfindungsgemäße Aufbau dargestellt, über weichen ein digitaler, bidirektionaler Datenstrom (z.B. zum Parametrieren bzw. Auslesen der Messkanäle) über eine einzige galvanisch getrennte Schnittstelle möglich ist. Eine Übertragungseinheit 3 befindet sich hier zwischen einer Primärseite 1 und einer Sekundärseite 2. Die beiden Seiten mögen sich dabei darin unterscheiden, ob sie beispielsweise explosionsgefährdet sind. Die Primärseite 1 sei hier beispielsweise die nicht explosionsgefährdete Seite. Auf dieser Seite befindet sich somit beispielsweise eine Energiequelle und/oder eine Steuerwarte und/oder ein ähnliches Leitsystem bzw. Parametriereingabesystem. Also allgemein die Seite, welche den eigentlichen Prozess oder den Bereich, in welchem sich der zu überwachende bzw. zu messende Prozess befindet. Der Prozess befindet sich dabei auf der Sekundärseite 2.

Auf der Sekundärseite 2 mögen hier beispielsweise zwei unterschiedliche Sensoren (z.B. ein Füllstandsmessgerät nach dem Radarprinzip und ein Temperatursensor) als Beispiele für Feldgeräte 8 angebracht sein, welche mit Energie versorgt werden müssen. Diese Energieversorgung wird dabei über die Übertragungseinheit 3 vorgenommen. Weiterhin muss jedoch auch ein Informations- bzw. Datenverkehr stattfinden. Dies ist beispielsweise erforderlich, damit die einzelnen Messgeräte auf der Sekundärseite 2 ihre Messwerte bzw. daraus abgeleitete Größen an die Primärseite 1, also beispielsweise an die Leitwarte übertragen. Umgekehrt ist es erforderlich, dass ggf. von der Primärseite 1 auf die Sekundärseite 2 Messparameter oder sonstige Werte zur Steuerung der Messungen übertragen werden. Hierbei ist es insbesondere erforderlich, dass eine galvanische Trennung zwischen der Primärseite 1 und der Sekundärseite 2 gegeben ist. Diese galvanische Trennung wird hier durch einen Transformator 3 vollzogen.

Die Datenübertragung von der Primär- 1 auf die Sekundärseite 2 findet dadurch statt, dass durch eine entsprechend auf der Primärseite 1 vorgesehene Frequenzsteuereinheit 4 die Arbeitsfrequenz des Transformators 3 entsprechend der zu übertragenden Information geändert wird (FSK, Frequency Shift Keying, Frequenzumtastung). So können beispielsweise zwei unterschiedliche Frequenzbereiche jeweils mit einer logischen 1 bzw. einer logischen 0 assoziiert sein. Je nach Komplexität der Anlage können jedoch auch weitere Informationen übertragen werden.

Die Datenübertragung von der Sekundär- 2 auf die Primärseite 1 ereignet sich dadurch, dass die Last auf der Sekundärseite 2 kurzzeitig geändert wird. D.h. auf der Primärseite 1 wird festgestellt, dass ein erhöhter Strombedarf besteht. Diese Laständerung wird auf der Primärseite 1 detektiert und ebenfalls entsprechend in logische Signale übertragen.

Auf der Sekundärseite 2 befinden sich zwei unterschiedliche Datenkanäle 6, 7, welche beispielsweise für die Verbindung mit den zwei unterschiedlichen Messsystemen vorgesehen sind. In alternativen Ausgestaltungen sind mehr als zwei oder weniger als zwei Datenkanäle vorgesehen. Damit die Daten den einzelnen Datenkanälen zugeordnet werden können, wird beispielsweise vor jeder Datenübertragung die Adresse des entsprechenden bzw. angesprochenen oder sprechenden Kanals übertragen. Somit wird von der Primärseite 1 auf die Sekundärseite 2 die Adresse des Datenkanals übertragen, für welche die Daten/Informationen bestimmt sind. Umgekehrt wird bei der Übertragung von der Sekundärseite 2 auf die Primärseite 1 stets die Adresse des Kanals übertragen, welcher die Information sendet.
In einer weiteren Variante wird ggf. auf die Übertragung der Adresse verzichtet, wenn es sich um Informationen handelt, welche von mehreren Datenkanälen stammen können bzw. welche sozusagen allgemeine Aussagen über das System tätigen, oder in dem Fall, dass von der Primärseite 1 auf die Sekundärseite 2 die Informationen an mehrere Kanäle gleichzeitig übertragen werden soll. Neben der galvanischen Trennung zwischen der Primär- 1 und der Sekundärseite 2 besteht vorzugsweise auch eine galvanische Trennung zwischen den beiden Datenkanälen 6, 7.

Damit nicht mehrere Kanäle 6, 7 gleichzeitig eine Laständerung vornehmen, ist in einer Ausgestaltung vorgesehen, dass nur derjenige Datenkanal sprechen darf, welcher vorher von der Primärseite 1 ein entsprechendes Aufforderungssignal erhalten hat oder welcher überhaupt von der Primärseite 1 adressiert worden ist. Es ist also eine Master-Slave-Architektur vorgesehen, welche jeweils einen Kanal zum Senden auswählt.

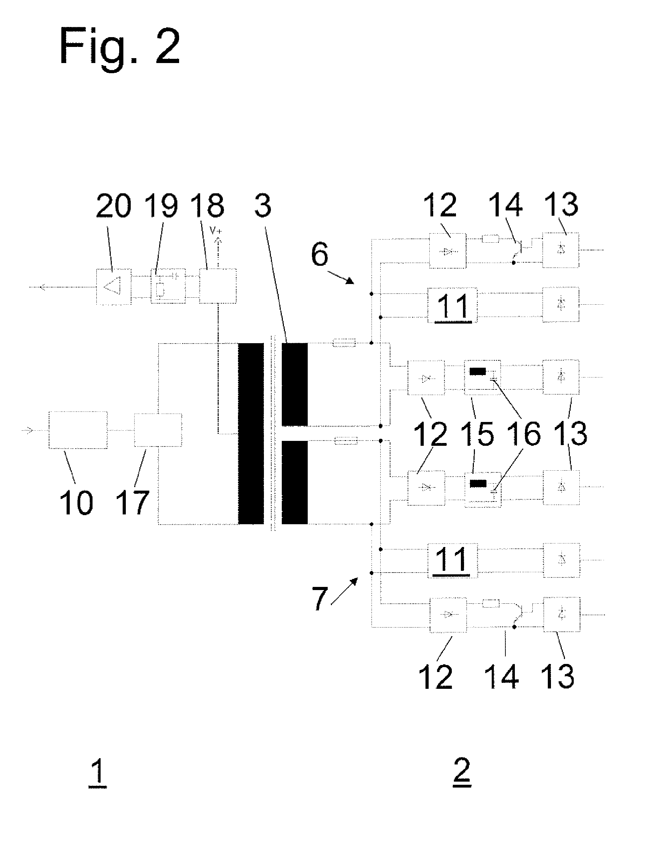

In der Fig. 2 sind einige Details des erfindungsgemäßen Aufbaus dargestellt. Für die Datenübertragung von der Primärseite 1 auf die Sekundärseite 2 ist dabei ein FSK-Modulator 10 und ein Push-Pull-Treiber 17 vorgesehen. Beide erlauben die Modulation der Arbeitsfrequenz der Übertragungseinheit 3, um diesem die entsprechenden Informationen bzw. Daten aufzuprägen. Diese übertragenen Daten werden auf der Sekundärseite 2 durch einen FSK-Demodulator 11 wieder herausgefiltert und dem entsprechenden Gerät des zugeordneten Datenkanals 6, 7 als serieller Datenstrom zur Verfügung gestellt.

Die Datenübertragung von der Sekundärseite 2 auf die Primärseite 1 ereignet sich hier dadurch, dass durch einen Schalter im entsprechenden Datenkanal eine zusätzliche Last 14 geschaltet wird, welche eine kurzzeitige Lasterhöhung an der Sekundärseite des Transformators 3 hervorruft. Auf der Primärseite 1 wird umgekehrt der Strom abgegriffen bzw. durch einen Stromsensor 18 gemessen und über ein Differenzierglied 19 und einen Signalformer 20, welcher aus den kurzen Impulsen des Differenzierglieds 19 einen seriellen Datenstrom erzeugt, beispielsweise einer Auswerteeinheit zugeführt, welche entsprechend aus dieser Laständerung die zu übertragende Information bzw. die Daten bzw. die Adresse des Datenkanals, von welchem die Daten stammen, herausfiltert. Um zu verhindern, dass eine Laständerung des mit dem jeweiligen Datenkanal 6, 7 verbundenen Feldgerätes 8 als eine zu übertragende Information oder als eine Adresse auf der Primärseite 1 verstanden wird, ist hier jeder Datenkanal 6, 7 mit einem Energiespeicher 16 versehen, welcher eine Pufferung der vom Feldgerät 8 erforderlichen Energie darstellt. Im dargestellten Fall handelt es sich jeweils um einen Kondensator, welcher hier Teil der Filtereinheit 15 ist.

Bei der Datenübertragung wird dabei jeweils in einer Ausgestaltung zuerst die Information über die entsprechende Adresse des Datenkanals 6, 7, von welchem die Daten stammen bzw. für welchen die Daten bestimmt sind, übertragen und im Anschluss erst die eigentlichen Daten. Somit wird für die Übertragung auch ein entsprechendes Protokoll verwendet, welches in einer Ausgestaltung die Übertragung der Adresse vorsieht, d.h. die Daten und die Adresse werden in einer Ausgestaltung stets in einem Paket übertragen. Die Reihenfolge von Adresse und Information bei der Übertragung ist dabei beliebig festzulegen.

Die erfindungsgemäße Vorrichtung ist dabei beispielsweise innerhalb eines Gerätes realisiert. In einer Ausgestaltung befindet sie sich auf einer Leiterplatte. Oder sie ist ein besonderes Gerät, welche die Verbindung zwischen zwei Zonen bzw. zwischen den beiden Seiten als Schnittstelle erlaubt.

### Bezugszeichenliste

- 1: Primärseite
- 2: Sekundärseite
- 3: Übertragungseinheit
- 4: Frequenzsteuereinheit
- 5: Lasteinstelleinheit
- 6: Erster Datenkanal
- 7: Zweiter Datenkanal
- 8: Feldgerät
- 10: FSK-Modulator
- 11: FSK-Demodulator
- 12: Gleichrichter
- 13: Barriere
- 14: Zusatzlast
- 15: Filter
- 16: Energiespeicher
- 17: Push-Pull-Treiber
- 18: Stromsensor
- 19: Differenzierer
- 20: Signalformer

## Patentansprüche

1. Vorrichtung zur Übertragung von elektrischer Energie und Daten zwischen einer Primärseite (1) und einer Sekundärseite (2),
**dadurch gekennzeichnet,**
**dass** mindestens eine Übertragungseinheit (3) zwischen der Primärseite (1) und der Sekundärseite (2) vorgesehen ist,
**dass** auf der Sekundärseite (2) mindestens ein erster Datenkanal (6) vorgesehen ist, welcher mindestens eine Adresse aufweist,
**dass** auf der Primärseite (1) mindestens eine Frequenzsteuereinheit (4) vorgesehen ist, welche derartig ausgestaltet ist, dass die Frequenzsteuereinheit (4) die Arbeitsfrequenz der Übertragungseinheit (3) entsprechend der zu übertragenden Daten und entsprechend der Adresse [mindestens des ersten Datenkanals (6) einstellt,
**dass** auf der Sekundärseite (2) mindestens eine Lasteinstelleinheit (5) vorgesehen ist, welche derartig ausgestaltet ist, dass die Lasteinstelleinheit (5) die elektrische Last, welche auf der Sekundärseite (2) an der Übertragungseinheit (3) anliegt, entsprechend der zu übertragenden Daten und entsprechend der Adresse mindestens des ersten Datenkanals (6) einstellt,
wobei Daten von der Primärseite auf die Sekundärseite über eine Modulation der Arbeitsfrequenz übertragen werden und wobei von der Sekundärseite auf die Primärseite eine Laständerung zur Übertragung der Daten dient.

2. Vorrichtung nach Anspruch 1,
**dadurch gekennzeichnet,**
**dass** auf der Sekundärseite (2) mindestens ein erster Datenkanal (6) und mindestens ein zweiter Datenkanal (7) vorhanden sind, welche jeweils mindestens eine eigene Adresse aufweisen.

3. Vorrichtung nach Anspruch 2,
**dadurch gekennzeichnet,**
**dass** der erste Datenkanal (6) und der zweite Datenkanal (7) derartig ausgestaltet sind, dass der erste Datenkanal (6) und der zweite Datenkanal (7) galvanisch voneinander getrennt sind.

4. Vorrichtung nach Anspruch 2 oder 3,
**dadurch gekennzeichnet,**
**dass** die Frequenzsteuereinheit (4) derartig ausgestaltet ist, dass die Frequenzsteuereinheit (4) die Arbeitsfrequenz der Übertragungseinheit (3) entsprechend der zu übertragenden Daten und/oder entsprechend der Adresse des Datenkanals (6, 7) oder der Adressen der Datenkanäle (6, 7), für welchen bzw. für welche die Daten bestimmt sind, einstellt,
**dass** die Lasteinstelleinheit (5) derartig ausgestaltet ist, dass die Lasteinstelleinheit (5) die elektrische Last, welche auf der Sekundärseite (2) an der Übertragungseinheit (3) anliegt, entsprechend der zu übertragenden Daten und/oder entsprechend der Adresse des Datenkanals (6, 7) oder der Adressen der Datenkanäle (6, 7), von welchem bzw. von welchen die Daten stammen, einstellt.

5. Vorrichtung nach mindestens einem der Ansprüche 1 bis 4,
**dadurch gekennzeichnet,**
**dass** mindestens der erste Datenkanal (6) derartig ausgestaltet ist, dass der erste Datenkanal (6) nur nach einer vorhergehenden Adressierung von der Primärseite (1) über die Übertragungseinheit (3) Daten über die Übertragungseinheit (3) überträgt.

6. Vorrichtung nach mindestens einem der Ansprüche 1 bis 5,
**dadurch gekennzeichnet,**
**dass** die Übertragungseinheit (3) derartig ausgestaltet ist, dass die Übertragungseinheit (3) eine galvanische Trennung zwischen der Primärseite (1) und der Sekundärseite (2) bewirkt.

7. Vorrichtung nach mindestens einem der Ansprüche 1 bis 6,
**dadurch gekennzeichnet,**
**dass** die Laststeuereinheit (5) derartig ausgestaltet ist, dass die Laststeuereinheit (5) zur Übertragung von Daten und/oder Adressen eine steilflankige und/oder kurzzeitige Änderung der Last vornimmt.

8. Vorrichtung nach mindestens einem der Ansprüche 1 bis 7,
**dadurch gekennzeichnet,**
**dass** die Übertragungseinheit (3) mindestens einen Transformator aufweist.

9. Vorrichtung nach mindestens einem der Ansprüche 1 bis 8,
**dadurch gekennzeichnet,**
**dass** es sich bei den zu übertragenden Daten mindestens um Messwerte und/oder um Messparameter handelt.

10. Vorrichtung nach mindestens einem der Ansprüche 1 bis 9,
**dadurch gekennzeichnet,**
**dass** mindestens der erste Datenkanal (6) und/oder der zweite Datenkanal (7) mindestens einen Energiespeicher (16) aufweist.

## Claims

1. Unit for the transmission of electrical energy and data between a primary side (1) and a secondary side (2),
**characterized in that**
at least one transmission unit (3) is provided between the primary side (1) and the secondary side (2),
at least a first data channel (6), which has at least one address, is provided on the secondary side (2),
at least one frequency control unit (4) is provided on the primary side (1), said frequency control unit being designed in such a way that the frequency control unit (4) sets the operating frequency of the transmission unit (3) depending on the data to be transmitted and depending on the address at least of the first data channel (6),
**in that** at least one load regulation unit (5) is provided on the secondary side (2), said unit being designed in such a way that the load regulation unit (5) sets the electrical load that is applied to the transmission unit (3) on the secondary side depending on the data to be transmitted and depending on the address of at least the first data channel (6),
wherein data are transmitted from the primary side to the secondary side (2) via a modulation of the operating frequency and wherein a variation in the load from the secondary side to the primary side is used for the transmission of data.

2. Unit as claimed in Claim 1,
**characterized in that**
at least a first data channel (6) and at least a second data channel (7) are provided on the secondary side (2), each channel having at least one address of its own.

3. Unit as claimed in Claim 2,
**characterized in that**
the first data channel (6) and the second data channel (7) are designed in such a way that the first data channel (6) and the second data channel (7) are galvanically isolated from one another.

4. Unit as claimed in Claim 2 or 3,
**characterized in that**
the frequency control unit (4) is designed in such a way that the frequency control unit (4) regulates the operating frequency of the transmission unit (3) depending on the data to be transmitted and/or depending on the address of the data channel (6, 7) or the addresses of the data channels (6, 7) for which the data are destined,
**in that** the load regulation unit (5) is designed in such a way that the load regulation unit (5) regulates the electrical load which applies to the transmission unit (3) on the secondary side (2) depending on the data to be transmitted and/or depending on the address of the data channel (6, 7) or the addresses of the data channels (6, 7) from which the data come.

5. Unit as claimed in at least one of the Claims 1 to 4,
**characterized in that**
at least the first data channel (6) is designed in such a way that the first data channel (6) only transmits data via the transmission unit (3) following prior addressing from the primary side (1) via the transmission unit (3).

6. Unit as claimed in at least one of the Claims 1 to 4,
**characterized in that**
the transmission unit (3) is designed in such a way that the transmission unit (3) effectuates a galvanic isolation between the primary side (1) and the secondary side (2).

7. Unit as claimed in at least one of the Claims 1 to 6,
**characterized in that**
the load regulation unit (5) is designed in such a way that the load regulation unit (5) makes a steep and/or temporary change in the load in order to transmit data and/or addresses.

8. Unit as claimed in at least one of the Claims 1 to 7,
**characterized in that**
the transmission unit (3) has at least one transformer.

9. Unit as claimed in at least one of the Claims 1 to 8,
**characterized in that**
the data to be transmitted are at least measured values and/or measuring parameters.

10. Unit as claimed in at least one of the Claims 1 to 9,
**characterized in that**
at least the first data channel (6) and/or the second data channel (7) features at least one energy storage unit (16).

## Revendications

1. Dispositif destiné à la transmission d'énergie électrique et de données entre un côté primaire (1) et un côté secondaire (2),
**caractérisé**
**en ce qu'**est prévue au moins une unité de transmission (3) entre le côté primaire (1) et le côté secondaire (2),
**en ce qu'**est prévu sur le côté secondaire (2) au moins un premier canal de données (6), qui présente au moins une adresse,
**en ce qu'**est prévue sur le côté primaire (1) au moins une unité de commande de fréquence (4), qui est conçue de telle sorte que l'unité de commande de fréquence (4) règle la fréquence de travail de l'unité de transmission (3) en fonction des données à transmettre et en fonction de l'adresse de l'au moins premier canal de données (6),
**en ce qu'**est prévue sur le côté secondaire (2) au moins une unité de réglage de charge (5), qui est conçue de telle sorte que l'unité de réglage de charge (5) règle la charge électrique, qui est appliquée côté secondaire (2) sur l'unité de transmission (3) en fonction des données à transmettre et en fonction de l'adresse de l'au moins premier canal de données (6),
pour lequel les données sont transmises du côté primaire au côté secondaire au moyen d'une modulation de la fréquence de travail et pour lequel une variation de la charge du côté secondaire vers le côté primaire sert pour la transmission des données.

2. Dispositif selon la revendication 1,
**caractérisé**
**en ce que** sont disponibles sur le côté secondaire (6) au moins un premier canal de données (6) et au moins un deuxième canal de données (7), lesquels présentent chacun au moins une adresse propre.

3. Dispositif selon la revendication 2,
**caractérisé**
**en ce que** le premier canal de données (6) et le deuxième canal de données (7) sont conçus de telle sorte que le premier canal de données (6) et le deuxième canal de données (7) soient séparés galvaniquement l'un de l'autre.

4. Dispositif selon la revendication 2 ou 3,
**caractérisé**
**en ce que** l'unité de commande de fréquence est conçue de telle sorte que l'unité de commande de fréquence (4) règle la fréquence de travail de l'unité de transmission (3) en fonction des données à transmettre et/ou en fonction de l'adresse du canal de données (6, 7) ou des adresses des canaux de données (6, 7), pour lequel ou pour lesquels les données sont destinées,
**en ce que** l'unité de réglage de charge (5) règle la charge électrique, qui est appliquée côté secondaire (2) sur l'unité de transmission (3) en fonction des données à transmettre et en fonction de l'adresse du canal de données (6, 7) ou des adresses des canaux de données (6, 7), duquel ou desquels proviennent les données.

5. Dispositif selon l'une des revendications 1 à 4,
**caractérisé**
**en ce qu'**au moins le premier canal de données (6) est conçu de telle sorte que le premier canal de données (6) ne transmette des données par l'intermédiaire de l'unité de transmission (3) qu'après un adressage préalable depuis le côté primaire (1) via l'unité de transmission (3).

6. Dispositif selon l'une des revendications 1 à 5,
**caractérisé**
**en ce que** l'unité de transmission (3) est conçue de telle sorte que l'unité de transmission (3) produise une séparation galvanique entre le côté primaire (1) et le côté secondaire (2).

7. Dispositif selon l'une des revendications 1 à 6,
**caractérisé**
**en ce que** l'unité de commande de charge (5) est conçue de telle sorte que l'unité de commande de charge (5) procède à une variation à front raide et/ou momentanée de la charge en vue de la transmission de données et/ou d'adresses.

8. Dispositif selon l'une des revendications 1 à 7,
**caractérisé**
**en ce que** l'unité de transmission (3) comporte au moins un transformateur.

9. Dispositif selon l'une des revendications 1 à 8,
**caractérisé**
**en ce qu'**il s'agit, concernant les données à transmettre, d'au moins de valeurs mesurées et/ou de paramètres de mesure.

10. Dispositif selon l'une des revendications 1 à 9,
**caractérisé**
**en ce qu'**au moins le premier canal de données (6) et/ou le deuxième canal de données (7) présentent au moins un accumulateur d'énergie (16).
